# EUROPÄISCHE PATENTSCHRIFT

(11) **EP 3 077 572 B1**
(45) Veröffentlichungstag und Bekanntmachung des Hinweises auf die Patenterteilung: **13.12.2017**
(21) Anmeldenummer: 15700418.5
(22) Anmeldetag: 05.01.2015
(51) Int. Cl.: C23C 28/00, F01D 5/28

(54) **VERBESSERTE VERSCHLEISSBESTÄNDIGKEIT EINES HOCHTEMPERATURBAUTEILS DURCH KOBALTBESCHICHTUNG**
IMPROVED WEAR RESISTANCE OF A HIGH-TEMPERATURE COMPONENT IMPARTED BY A COBALT COATING
RÉSISTANCE À L'USURE D'UN COMPOSANT À HAUTE TEMPÉRATURE AMÉLIORÉE PAR UN REVÊTEMENT AU COBALT

(30) Priorität: 11.02.2014 DE 102014202457
(43) Veröffentlichungstag der Anmeldung: 12.10.2016
(73) Patentinhaber: Siemens Aktiengesellschaft, 80333 München (DE)
(72) Erfinder: BURBAUM, Bernd, 14612 Falkensee (DE); LAUX, Britta, 14059 Berlin (DE)
(86) Internationale Anmeldenummer: PCT/EP2015/050032
(87) Internationale Veröffentlichungsnummer: WO 2015/120994

(56) Entgegenhaltungen:
- EP-A1- 1 715 140
- EP-A1- 2 316 988
- US-A- 4 275 124
- SIDHU T S ET AL: "Studies of the metallurgical and mechanical properties of high velocity oxy-fuel sprayed stellite-6 coatings on Ni- and Fe-based superalloys", SURFACE AND COATINGS TECHNOLOGY, ELSEVIER, AMSTERDAM, NL, Bd. 201, Nr. 1-2, 12. September 2006 (2006-09-12), Seiten 273-281, XP024996471, ISSN: 0257-8972, DOI: 10.1016/J.SURFCOAT.2005.11.108 [gefunden am 2006-09-12]
- -: "Special metals Inconel alloy 718", , September 2007 (2007-09), Seiten 1-28, XP055174172, Gefunden im Internet: URL:http://www.specialmetals.com/documents /Inconel alloy 718.pdf [gefunden am 2015-03-05]
- P CARON ET AL: "Evolution of Ni-based superalloys for single crystal gas turbine blade applications", AEROSPACE SCIENCE AND TECHNOLOGY, Bd. 3, Nr. 8, Dezember 1999 (1999-12), Seiten 513-523, XP055174145, ISSN: 1270-9638, DOI: 10.1016/S1270-9638(99)00108-X

## Beschreibung

Die Erfindung betrifft ein Hochtemperaturbauteil, bei dem eine Schicht aus einer Kobaltbasislegierung verwendet wird, um die Verschleißbeständigkeit zu erhöhen.

Insbesondere Schaufelspitzen von Turbinenschaufeln im Hochtemperaturbereich, die sogenannten "Tips", zeigen einen erhöhten Verschleiß, der bedingt ist durch einen erosiven Materialabtrag.

Dies führt dazu, dass die Spitze der Laufschaufeln regelmäßig rekontouriert werden müssen durch verschiedene Reparaturverfahren wie Schweißen oder Löten. In US 4 275 124 A, EP 1 715 140 A1 und EP 2 316 988 A1 sind verschleißbeständige Turbinenschaufeln offenbart.

Es ist daher Aufgabe der Erfindung ein Verfahren aufzuzeigen, mit dem die Verschleißbeständigkeit verbessert wird, damit die Wartungsintervalle verlängert werden können.

Die Aufgabe wird gelöst durch ein Bauteil gemäß Anspruch 1.

In den Unteransprüchen sind weitere vorteilhafte Maßnahmen aufgelistet, die beliebig miteinander kombiniert werden können um weitere Vorteile zu erzielen.

Es wird vorgeschlagen, eine Schicht aus einer Kobaltbasislegierung, die als Substratmaterial bekannt ist oder ähnelt, auf den Bereich des Bauteils aufzubringen, der dem Verschleiß unterliegt, wobei das Bauteil vorzugsweise eine nickelbasierte Legierung als Substratmaterial aufweist, dessen Kohlenstoffgehalt geringer ist als der der Kobaltbasislegierung. Bei den hohen Einsatztemperaturen kommt es zur Kohlenstoffdiffusion von der Beschichtung in den Grundwerkstoff hinein, der normalerweise unerwünscht ist, aber hier zu einem höheren Karbidanteil in dem Substrat führt und damit zu einer höheren Härte und damit zu einer erhöhten Verschleißbeständigkeit führt.

Ein Beispiel für ein nickelbasiertes Substrat ist der Schaufelwerkstoff PWA1483, auf dem eine kobaltbasierte Legierung PWA795 aufgebracht wird.

Dies führt allgemein zu Karbiden vom Typ MC und M23C6, die zur höheren Härte und damit zur erhöhten Verschleißbeständigkeit führen.

Es zeigen:
- Figur 1, 2: Ausführungsbeispiele der Erfindung,
- Figur 3: eine Liste von Superlegierungen.

Die Figuren und die Beschreibung stellen nur Ausführungsbeispiele der Erfindung dar.

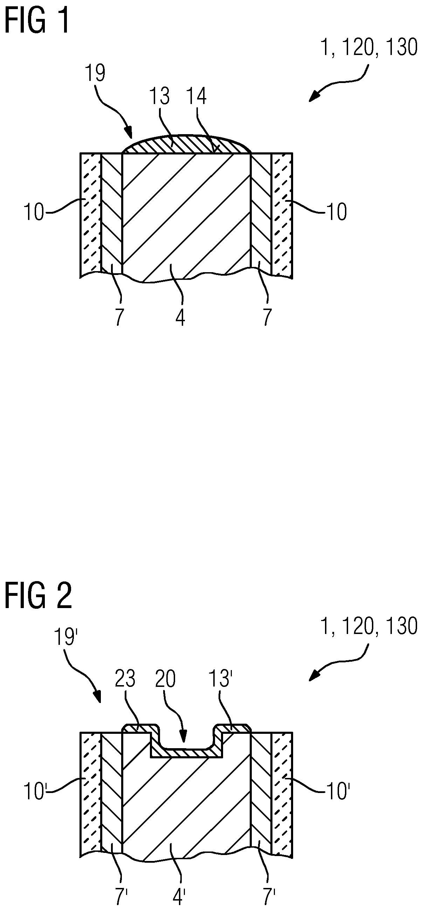

Die Figur 1 zeigt ein Substrat 4, das beschichtet ist.

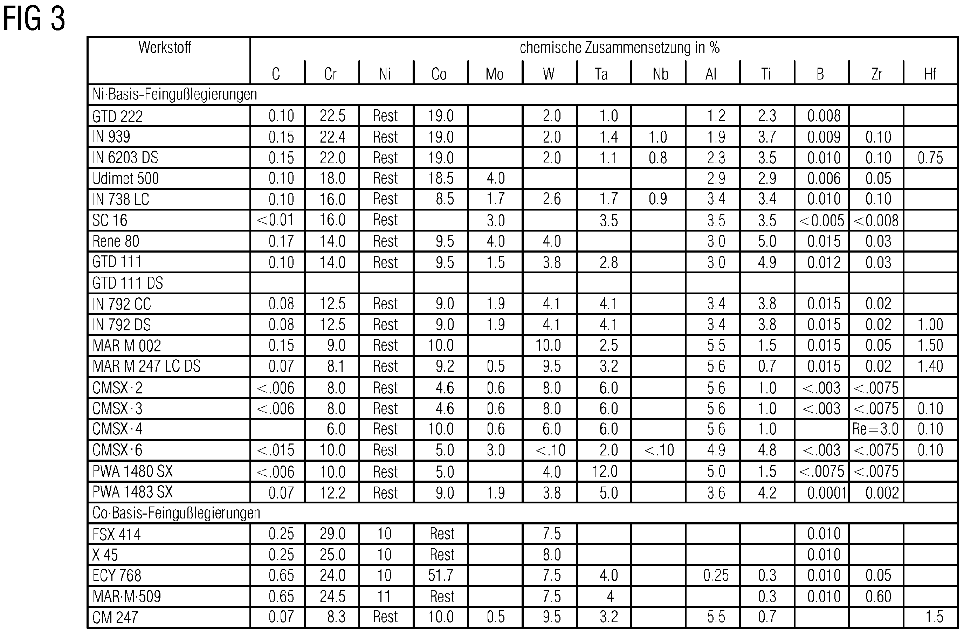

Das Substrat 4, 4' (Fig. 2) ist insbesondere bei Hochtemperaturbauteilen wie Turbinenschaufeln 120, 130 eine nickel- oder kobaltbasierte Superlegierung, insbesondere ist sie nickelbasiert (Fig. 3). Das Substrat 4, 4' weist einen ersten Kohlenstoffanteil auf. Auf den Seitenflächen des Substrats 4, 4' ist eine metallische Schutzbeschichtung 7, 7' (Fig. 2) und/oder eine keramische Schutzbeschichtung 10, 10' (Fig. 2) aufgebracht.

Die metallische Schutzbeschichtung 7, 7' ist frei von Kohlenstoff (C) und weist insbesondere die Zusammensetzung NiCoCrAl oder NiCoCrAlX (X = Y, Re), NiCoCrAlTa, NiCoCrAlFe, NiCOCrAlYFe, NiCoCrAlYFeTa, NiCoCrAlFeTa oder NiCoCrAlYTa aufweist, insbesondere besteht sie daraus. Die Anteile von Tantal (Ta) oder Eisen (Fe) liegen im einstelligen Prozentbereich, insbesondere <= 5 Gew.-%.

Die flache Schaufelspitze 19, 19' (Fig. 2) weist im Stand der Technik oft keine Beschichtung auf, so dass ein freies Ende 19 des Substrats 4, 4' dem erhöhten Verschleiß ausgesetzt wäre.

Auf diese freiliegende Fläche 14, 20, 23 (Fig. 2) des Substrats 4, 4' wird eine Schicht 13, 13' (Fig. 2) aus einer Kobaltbasislegierung aufgebracht.

Diese Kobaltbasislegierung weist einen höheren Kohlenstoffgehalt (C) als das Substrat 4, 4' auf, wobei der absolute Unterschied im Kohlenstoffgehalt von Substrat 4, 4' und Schicht 13, 13' mindestens 0,03 Gew.-% beträgt.

In Figur 2 ist ein weiteres Ausführungsbeispiel gezeigt, bei dem die Spitze 19' als Tip ausgebildet ist, die eine äußere Wand 23 mit einer Vertiefung 20 aufweist. Ebenso sind hier wie in Figur 1 die metallischen 7' und keramischen 10' Beschichtungen vorhanden.

Ebenfalls wird dort 20, 23 eine Schicht 13' aus einer Kobaltbasislegierung auf das Substrat 4' im Bereich der Spitze 19' aufgebracht.

Ohne weitere thermische Behandlung der Bauteile nach Figur 1, 2 kommt es nach einer gewissen Einsatzdauer der Bauteile bei den höheren Temperaturen schon nach 100 Stunden bei 1173K - 1223K zur Diffusion von Kohlenstoff (C) aus der vorzugsweise 0,1mm dünnen kobaltbasierten Schicht 13, 13' in das Substrat 4, 4'.

Vorzugsweise kann auf den Schichten 13, 13' eine keramische Schicht, ggf. zusammenhängend mit den keramischen Schichten 10, 10', vorhanden sein.

Die nickelbasierte Legierung des Substrats 4, 4' weist zumindest Chrom (Cr), Kobalt (Co), Wolfram (W), Aluminium (Al), Titan (Ti), optional Tantal (Ta) und vorzugsweise kein Rhenium (Re) und vorzugsweise kein Yttrium (Y) auf.

Die kobaltbasierte Legierung weist zumindest Chrom (Cr), Nickel (Ni), Wolfram (W), optional (Tantal), Aluminium (Al), Titan (Ti) und vorzugsweise kein Rhenium (Re) und vorzugsweise kein Yttrium (Y) auf.

## Patentansprüche

1. Hochtemperaturbauteil
aus einem metallischem Substrat (4, 4') einer nickelbasierten oder kobaltbasierten Superlegierung,
insbesondere aus einer nickelbasierten Legierung,
wobei das Substrat (4, 4') einen ersten Kohlenstoffgehalt aufweist,
wobei direkt auf eine Fläche (14, 20, 23) des Substrats (4, 4') eine Schicht (13, 13') aus einer kobaltbasierten Legierung aufgebracht wird,
die einen höheren Kohlenstoffgehalt aufweist als das Substrat (4, 4'),
bei dem die Schicht (13, 13') nur lokal aufgebracht wird, insbesondere in einem Bereich (19, 19') mit erhöhter Erosionsbelastung und
bei dem das Substrat (4, 4') mit einer metallischen Beschichtung (7, 7') und/oder einer keramischen Beschichtung (10, 10') auf der metallischen Beschichtung (7, 7') beschichtet ist,
die an die Fläche (14, 20, 23) des Substrats (4, 4') angrenzen,
bei dem der absolute Unterschied im Kohlenstoffgehalt von Substrat (4, 4') und Schicht (13, 13') mindestens 0,03 Gew.-% beträgt,
bei dem die nickelbasierte Legierung des Substrats (4, 4') zumindest Chrom (Cr), Kobalt (Co), Wolfram (W), Aluminium (Al), Titan (Ti), optional Tantal (Ta) und vorzugsweise kein Rhenium (Re) und
vorzugsweise kein Yttrium (Y)
aufweist,
bei dem die kobaltbasierte Legierung der Schicht (13, 13') zumindest Chrom (Cr), Nickel (Ni), Wolfram (W),
optional Tantal (Ta), Aluminium (Al), Titan (Ti) und vorzugsweise kein Rhenium (Re) und
vorzugsweise kein Yttrium (Y)
aufweist,
bei dem die metallische Beschichtung (7, 7') kein Kohlenstoff aufweist
und insbesondere NiCoCrAl, NiCoCrAlY, NiCoCrAlTa oder NiCoCrAlFe, NiCOCrAlYFe, NiCoCrAlYFeTa, NiCoCrAlFeTa oder NiCoCrAlYTa aufweist,
ganz insbesondere daraus besteht,
bei dem die Schicht (13, 13') eine Dicke von 1µm bis 100µm aufweist.

2. Bauteil nach Anspruch 1,
bei dem der Bereich (19) eine flache, ebene Spitze (19) darstellt.

3. Bauteil nach Anspruch 1,
bei dem der Bereich (19') eine Spitze (19') mit einer freistehenden Wand (23) darstellt.

4. Bauteil nach einem oder mehreren der vorherigen Ansprüche,
bei dem das Substrat (4, 4') gerichtet erstarrt ist, insbesondere kolumnar erstarrt,
ganz insbesondere einkristallin erstarrt ist.

5. Bauteil nach einem oder mehreren der vorherigen Ansprüche,
bei dem die Schicht (13, 13') die metallische Beschichtung (7, 7') höchstens teilweise überlappt.

6. Bauteil nach einem oder mehreren der vorherigen Ansprüche,
bei dem die Schicht (13, 13') mindestens 10% dünner ausgebildet ist als die metallische Beschichtung (7, 7').

## Claims

1. High-temperature component
composed of a metallic substrate (4, 4') of a nickel-based or cobalt-based superalloy,
in particular composed of a nickel-based alloy,
wherein the substrate (4, 4') has a first carbon content,
wherein a layer (13, 13') composed of a cobalt-based alloy is applied directly to an area (14, 20, 23) of the substrate (4, 4'),
said layer having a higher carbon content than the substrate (4, 4'), in which the layer (13, 13') is applied only locally, in particular in a region (19, 19') with increased erosion loading and in which the substrate (4, 4') is coated with a metallic coating (7, 7') and/or a ceramic coating (10, 10') on the metallic coating (7, 7'), which adjoin the area (14, 20, 23) of the substrate (4, 4'),
in which the absolute difference in the carbon content of the substrate (4, 4') and the layer (13, 13') is at least 0.03% by weight, in which the nickel-based alloy of the substrate (4, 4') comprises at least chromium (Cr), cobalt (Co), tungsten (W), aluminum (Al), titanium (Ti), optionally tantalum (Ta) and preferably no rhenium (Re) and preferably no yttrium (Y),
in which the cobalt-based alloy of the layer (13, 13') comprises at least chromium (Cr), nickel (Ni), tungsten (W), optionally tantalum (Ta), aluminum (Al), titanium (Ti) and preferably no rhenium (Re) and preferably no yttrium (Y),
in which the metallic coating (7, 7') comprises no carbon and in particular comprises NiCoCrAl, NiCoCrAlY, NiCoCrAlTa or NiCoCrAlFe, NiCOCrAlYFe, NiCoCrAlYFeTa, NiCoCrAlFeTa or NiCoCrAlYTa, very particularly consists thereof,
in which the layer (13, 13') has a thickness of 1 µm to 100 µm.

2. Component according to Claim 1,
in which the region (19) represents a flat, planar tip (19).

3. Component according to Claim 1,
in which the region (19') represents a tip (19') with a freestanding wall (23).

4. Component according to one or more of the preceding claims,
in which the substrate (4, 4') is directionally solidified,
in particular solidified in columnar form,
very particularly is solidified in single-crystal form.

5. Component according to one or more of the preceding claims,
in which the layer (13, 13') at most partially overlaps the metallic coating (7, 7').

6. Component according to one or more of the preceding claims,
in which the layer (13, 13') is at least 10% thinner than the metallic coating (7, 7').

## Revendications

1. Composant à haute température
en un substrat (4, 4'), métallique d'un superalliage à base de nickel ou à base de cobalt,
notamment en un alliage à base de nickel,
dans lequel le substrat (4, 4'), a une première teneur en carbone,
dans lequel il est déposé, directement sur une surface (14, 20, 23) du substrat (4, 4'), une couche (13, 13') en un alliage à base de cobalt,
qui a une teneur en carbone plus grande que le substrat (4, 4),
dans lequel la couche (13, 13') n'est déposée que localement, notamment dans une région (19, 19') bien érodée et
dans lequel le substrat (4, 4'), est revêtu d'un revêtement (7, 7') métallique et/ou d'un revêtement (10, 10') céramique sur le revêtement (7, 7') métallique,
qui sont voisins de la surface (14, 20, 23) du substrat (4, 4'),
dans lequel la différence absolue de teneur en carbone du substrat (4, 4'), et de la couche (13, 13') est d'au moins 0,03 % en poids,
dans lequel l'alliage à base de nickel du substrat (4, 4'), comporte au moins du chrome (Cr), du cobalt (Co), du tungstène (W), de l'aluminium (Al), du titane (Ti), facultativement du tantale (Ta) et de préférence pas de rhénium (Re) et
de préférence pas du d'yttrium (Y),
dans lequel l'alliage à base de cobalt de la couche (13, 13') comporte au moins du chrome (Cr), du nickel (Ni), du tungstène (W), facultativement du tantale (Ta), de l'aluminium (Al), du titane (Ti) et de préférence pas de rhénium (Re) et
de préférence pas d'yttrium (Y),
dans lequel le revêtement (7, 7') métallique n'a pas de carbone
et comporte notamment du NiCoCrAl, NiCoCrAlY, NiCoCrAlTa ou NiCoCrAlFe, NiCoCrAlYFe, NiCoCrAlYFeTa, NiCoCrAlFeTa ou NiCoCrAlYTa,
en en étant notamment constitué,
dans lequel la couche (13, 13') a une épaisseur de 1µm à 100µm.

2. Composant suivant la revendication 1,
dans lequel la partie (19) constitue une pointe (19) plate plane.

3. Composant suivant la revendication 1,
dans lequel la partie (19') constitue une pointe (19') ayant un bord (23) en porte-à-faux.

4. Composant suivant l'une ou plusieurs des revendications précédentes,
dans lequel le substrat (4, 4'), est solidifié de manière dirigée,
en étant notamment solidifié en colonne,
d'une manière tout à fait particulière en étant solidifié d'une manière monocristalline.

5. Composant suivant l'une ou plusieurs des revendications précédentes,
dans lequel la couche (13, 13') chevauche, au moins en partie, le revêtement (7, 7') métallique.

6. Composant suivant l'une ou plusieurs des revendications précédentes,
dans lequel la couche (13, 13') est plus mince d'au moins 10% que le revêtement (7, 7') métallique.
